# EUROPÄISCHE PATENTANMELDUNG

(11) **EP 3 708 409 A1**
(43) Veröffentlichungstag der Anmeldung: **16.09.2020**
(21) Anmeldenummer: 20157093.4
(22) Anmeldetag: 13.02.2020
(51) Int. Cl.: B60L 15/20, B60W 10/08, B60W 30/02

(54) **TORQUE-VECTORING MIT AUTOMATISCHEM GIERMOMENTENAUSGLEICH**

(30) Priorität: 13.03.2019 DE 102019203388
(71) Anmelder: Audi AG, 85045 Ingolstadt (DE)
(72) Erfinder: Honkomp, Franz, 85049 Ingolstadt (DE)

(57) **Zusammenfassung**

Die vorliegende Erfindung betrifft ein Verfahren und ein System zum automatischen Giermomentenausgleich (aGa) bei einem elektrisch angetriebenen Fahrzeug mit radindividueller Drehmomentenverteilung (Torque-Vectoring-Antrieb).

## Beschreibung

Die vorliegende Erfindung betrifft ein Verfahren und ein System zum automatischen Giermomentenausgleich (aGa) bei einem elektrisch angetriebenen Fahrzeug mit radindividueller Drehmomentenverteilung (Torque-Vectoring-Antrieb).

Torque-Vectoring-Antriebe bieten den Freiheitsgrad einer bedarfsgerechten Verteilung des Antriebsmoments auf kurvenäußeres und kurveninneres Rad. Für elektrische Antriebe, welche diese Funktionalität durch zwei separate elektrische Maschinen umsetzen, besteht allerdings die Gefahr der unbeabsichtigten Aufbringung eines Giermoments. Ursache dafür ist, dass das Antriebsmoment nicht geregelt, sondern gesteuert wird. In Abhängigkeit von elektrischen Parametern werden Soll-Stromwerte berechnet, welche dann in einem geschlossenen Strom-Regelkreis geregelt werden. Aufgrund einer produktionsbedingten Streuung der elektrischen Eingangsparameter können bei gleicher Soll-Momentenanforderung für kurveninneres und kurvenäußeres Rad unterschiedliche Ist-Momente an den Rädern gestellt werden. Dies ist besonders für Torque-Vectoring-Antriebe ein Umstand, der zum einen die Sicherheit von Fahrzeug und Insassen und zum anderen den Verschleiß der Reifen negativ beeinflussen kann.

Man kann der produktionsbedingten Streuung entgegenwirken, indem die elektrischen Maschinen nach der End-Of-Line-Prüfung in Klassen eingeteilt werden und nur Maschinen, die einer definierten Klasse zugeteilt wurden, in einem Torque-Vectoring-Antrieb verbaut werden. Weiterhin besteht die Möglichkeit, die Antriebe durch entsprechende Anpassung der Daten der Software-Modelle einander anzugleichen. Beide Ansätze sind jedoch zeit- und kostenaufwendig. Zudem werden Effekte, die sich im Laufe der Lebenszeit des Antriebs ergeben, dabei nicht berücksichtigt.

Die vorliegende Erfindung hat sich die Aufgabe gestellt, ein einfacheres Verfahren zur Vermeidung unerwünschter Giermomente bei einem elektrisch angetriebenen Fahrzeug mit Torque-Vectoring-Antrieb zur Verfügung zu stellen, das zudem auch Veränderungen der Eigenschaften der elektrischen Maschinen über die Lebenszeit des Antriebs kompensieren kann.

Die DE 10 2009 026 994 A1 betrifft eine Schwimmwinkelregelung mit einem aktiven Differential. Die Schwimmwinkelregelung überwacht Abweichungen eines Ist-Schwimmwinkels zu einem Soll-Schwimmwinkel und korrigiert diese durch ein Aufbringen eines Giermoments mittels eines Differentials.

Die DE 10 2012 024 980 A1 offenbart ein Verfahren zum Bestimmen einer Soll-Kurvenneigung und eines Lenkwinkel-Korrekturwerts eines Kraftfahrzeugs beim Befahren eines kurvenförmigen Fahrbahnabschnitts. Eine Soll-Kurvenneigung und ein Lenkwinkel-Korrekturwert eines Kraftfahrzeugs beim Befahren eines kurvenförmigen Fahrbahnabschnitts wird bestimmt, indem eine momentane Querbeschleunigung des Kraftfahrzeugs in Abhängigkeit von einer momentanen Geschwindigkeit des Kraftfahrzeugs aus von einer nicht-optischen Sensorik bereitgestellten Sensordaten oder/und aus einer mittels eines optischen Detektionssystems bestimmten momentanen Fahrbahnkrümmung des kurvenförmigen Fahrbahnabschnitts bestimmt wird, eine momentane Soll-Kurvenneigung für das Kraftfahrzeug aus der bestimmten momentanen Querbeschleunigung und eine modifizierte momentane Soll-Kurvenneigung durch Gewichtung der berechneten Soll-Kurvenneigung mit einem geschwindigkeitsabhängigen Soll-Kurvenneigung-Gewichtungsfaktor berechnet werden, und in Abhängigkeit von der berechneten modifizierten momentanen Soll-Kurvenneigung und der berechneten momentanen Fahrbahnkrümmung ein Lenkwinkel-Korrekturwert für das Kraftfahrzeug bestimmt wird.

Aus der DE 10 2016 202 322 A1 ist eine Lenkunterstützung eines Fahrzeugs, das mit einem Lenkassistenzmechanismus und einem Torque-Vectoring-Mechanismus für rechte und linke Räder ausgestattet ist, bekannt. Die Lenkunterstützung umfasst eine Lenkassistenz-Momentensteuerung, die ein vom Lenkassistenz-Mechanismus abgegebenes Lenkassistenzmoment für die Fahrunterstützungssteuerung steuert; eine Steuerung des Unterschieds rechter und linker Brems-/Antriebskräfte, die eine vom Torque-Vectoring-Mechanismus abgegebene Brems-/Antriebskraftdifferenz zwischen den rechten und linken Rädern für die Lenkunterstützung steuert; und einer Steuersollwertbestimmung, die auf der Grundlage des Lenkmoments durch einen Fahrer einen Sollwert des Lenkassistenzmoments und einen Sollwert des Brems-/Antriebskraftunterschieds für die Lenkunterstützung bestimmt.

Die Aufgabe wird erfindungsgemäß gelöst durch ein Verfahren mit den Merkmalen des Anspruchs 1 und eine Vorrichtung mit den Merkmalen des Anspruchs 9. Ausgestaltungen und Weiterbildungen der Erfindung ergeben sich aus den abhängigen Ansprüchen und der Beschreibung.

Das erfindungsgemäße Verfahren ermöglicht einen automatischen Giermomentenausgleich, bei dem Daten von Lenkmoment- und Positionssensor der Fahrzeuglenkung herangezogen werden, um das unerwünschte Giermoment zu eliminieren, beispielsweise durch Ausregeln in einem geschlossenen Regelkreis.

Gegenstand der Erfindung ist ein Verfahren zum automatischen Giermomentenausgleich bei einem Fahrzeug mit einem elektrischen Antrieb mit radindividueller Drehmomentenverteilung (Torque-Vectoring-Antrieb), der mindestens zwei elektrische Maschinen umfasst, welche jeweils ein Rad einer Achse antreiben. Das Verfahren umfasst die Prüfung während einer Geradeausfahrt des Fahrzeugs, ob ein von Null verschiedenes Lenkmoment auftritt, und im Fall eines auftretenden Lenkmoments die Anpassung der Soll-Momentenanforderung an die beiden elektrischen Maschinen zur Eliminierung des auftretenden Lenkmoments. In einer Ausführungsform wird zusätzlich überprüft, ob die Fahrbeschleunigung bei der Geradeausfahrt einen vorgegebenen Schwellenwert überschreitet, d. h., ob die elektrischen Maschinen ein signifikantes Antriebsmoment erzeugen, bevor geprüft wird, ob ein von Null verschiedenes Lenkmoment auftritt.

In einer Ausführungsform des Verfahrens umfasst der Antrieb mit radindividueller Drehmomentenverteilung vier elektrische Maschinen, die jeweils eines der Räder des Fahrzeugs antreiben. In einer Ausführungsform des Verfahrens sind die elektrischen Maschinen an der Fahrzeugplattform gelagert. In einer Ausführungsform sind die elektrischen Maschinen Zentralantriebe, in einer anderen Ausführungsform sind die elektrischen Maschinen radnahe Antriebe.

Weisen die elektrischen Maschinen des Antriebs stark unterschiedliche elektrische Eigenschaften auf, so resultieren aus einer gleichen Soll-Momentenanforderung an die elektrischen Maschinen unterschiedliche Ist-Momente. Bei Geradeausfahrt mit einem solchen Satz elektrischer Maschinen tritt bei neutraler Lenkradposition ein von Null verschiedenes Lenkmoment auf. Das System stellt ein fahrzeugtechnisches Fehlverhalten fest. Aufgrund des Vorzeichens des Lenkmomentes kann das System feststellen, für welche der beiden elektrischen Maschinen einer Antriebsachse die Sollwertanforderung reduziert werden muss, um das Lenkmoment zu eliminieren. In einer Ausführungsform des Verfahrens wird in einer nachfolgenden Adaptionsschleife die Soll-Momentenanforderung der identifizierten Maschine dann sukzessive angepasst, bis das Lenkmoment bei Geradeausfahrt entfällt.

Das erfindungsgemäße Verfahren kann auch eine Veränderung der Eigenschaften der elektrischen Maschinen über die Lebenszeit feststellen und deren Auswirkung auf die Geradeausfahrt des Fahrzeugs ausregeln. Zudem stellt das erfindungsgemäße Verfahren eine Sicherheitsfunktion für die Geradeausfahrt von Fahrzeugen mit elektrischen Torque-Vectoring-Antrieben bereit.

Gegenstand der Erfindung ist auch ein System für den automatischen Giermomentenausgleich bei einem Fahrzeug mit einem elektrischen Antrieb mit radindividueller Drehmomentenverteilung (Torque-Vectoring-Antrieb), der mindestens zwei elektrische Maschinen umfasst, welche jeweils ein Rad einer Achse antreiben.

Das System umfasst Mittel zur Erfassung eines Lenkwinkels und eines Lenkmoments und eine Steuereinheit, die dafür eingerichtet ist, eine Soll-Momentenanforderung an die mindestens zwei elektrischen Maschinen zu stellen. Die Steuereinheit ist zudem dafür eingerichtet, Daten zu erfassten Lenkwinkeln und Lenkmomenten zu empfangen und auszuwerten und die Soll-Momentenanforderung an die mindestens zwei elektrischen Maschinen so anzupassen, dass das gemessene Lenkmoment bei Geradeausfahrt des Fahrzeugs verschwindet, d. h. dass bei einem neutralen Lenkwinkel ein Lenkmoment von Null auftritt.

In einer Ausführungsform umfasst das System zudem Mittel zur Erfassung einer Fahrbeschleunigung, beispielsweise einen Beschleunigungssensor.

In modernen Fahrzeugen sind in der Regel zumindest einige der benötigten Hardware- und Software-Komponenten bereits vorhanden. So weisen sie üblicherweise Lenkwinkel-, Lenkmoment- sowie Beschleunigungssensoren auf. Elektrisch betriebene Fahrzeuge mit Torque-Vectoring-Antrieben verfügen über ein Steuergerät, welches die elektrischen Maschinen individuell steuert und ihnen Soll-Momente vorgibt.

Erfindungsgemäß müssen die Informationen über Lenkmoment und Lenkwinkel über die Fahrzeugvernetzung an das Steuergerät weitergeleitet werden. Das Steuergerät muss dafür konfiguriert sein, die Informationen über Lenkmoment und Lenkwinkel auszuwerten und die Soll-Momentenanforderung an die elektrischen Maschinen so anzupassen, dass das gemessene Lenkmoment bei Geradeausfahrt des Fahrzeugs verschwindet. In einer Ausführungsform ist im Steuergerät der Ablauf des erfindungsgemäßen Verfahrens in Form von Software-Funktionen umgesetzt, welche die Momentenanforderung solange anpassen bzw. adaptieren, bis das gemessene Lenkmoment bei Geradeausfahrt verschwindet.

Zu den Vorteilen des erfindungsgemäßen Verfahrens und Systems gehören eine Verbesserung der Fahrzeugsicherheit und Zeit- und Kostenersparnisse in der Fahrzeugproduktion und Antriebsentwicklung.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einer Ausführungsform in der Zeichnung schematisch dargestellt und wird unter Bezugnahme auf die Zeichnung weiter beschrieben. Es zeigt:

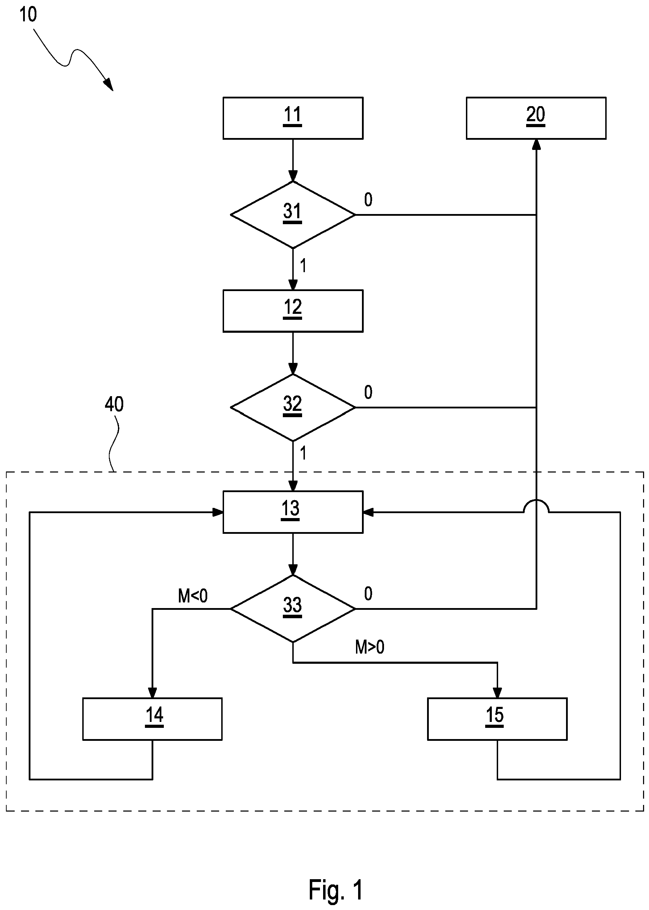

- Figur 1: ein Ablaufdiagramm einer Ausführungsform der Funktion für automatischen Giermomentenausgleich (aGa).

Figur 1 zeigt ein Ablaufdiagramm 10 einer Ausführungsform der Funktion für automatischen Giermomentenausgleich (aGa) bei einem Torque-Vectoring-Antrieb mit zwei elektrischen Maschinen.

Zu Beginn des Verfahrens steht die Ermittlung des Lenkwinkels 11 und die Überprüfung 31, ob der Lenkwinkel neutral ist, also eine Geradeausfahrt vorliegt. Ist dies nicht der Fall, erfolgt der Abbruch 20 des Verfahrens.

Liegt eine Geradeausfahrt vor, folgt die Ermittlung 12 der Fahrbeschleunigung a und die Überprüfung 32, ob die Fahrbeschleunigung a größer als ein vorgegebener Schwellenwert ist. Ist dies nicht der Fall, erfolgt der Abbruch 20 des Verfahrens.

Ist die Fahrbeschleunigung a größer als der Schwellenwert, d. h. erzeugen die elektrischen Maschinen ein signifikantes Antriebsmoment, folgt die Ermittlung 13 des Lenkmoments M und die Überprüfung 33, ob das Lenkmoment M von Null verschieden ist. Ist das Lenkmoment M gleich Null, ist das Ende 20 des Verfahrens erreicht.

Wird festgestellt, dass ein von Null verschiedenes Lenkmoment M vorliegt, so beginnt eine Adaptionsschleife 40. Ist das Lenkmoment M kleiner Null, erfolgt eine Reduzierung 14 des Soll-Moments der linken elektrischen Maschine. Ist das Lenkmoment M größer Null, erfolgt eine Reduzierung 15 des Soll-Moments der rechten elektrischen Maschine. In einer nicht dargestellten alternativen Ausführung sind aufgrund einer herstellerspezifischen Orientierung die Vorzeichen eines auftretenden Lenkmomentes umgekehrt. In diesem Fall wird bei einem Lenkmoment kleiner Null das Soll-Moment der rechten elektrischen Maschine und bei einem Lenkmoment größer Null das Soll-Moment der linken elektrischen Maschine reduziert.

Anschließend erfolgt erneut eine Ermittlung 13 des Lenkmoments M. Diese Schleife 40 wird durchlaufen, bis das Lenkmoment M ausgeregelt ist, d. h. den Wert Null hat. Ein Lenkmoment M von Null bedeutet, dass die Ist-Momente der elektrischen Maschinen gleich sind. Das Verhältnis der Soll-Momente, bei dem die Ist-Momente der elektrischen Maschinen gleich sind, wird abgespeichert und dient als Korrekturfaktor bei der Ansteuerung der elektrischen Maschinen.

### Bezugszeichenliste

- 10: Funktion für automatischen Giermomentenausgleich
- 11: Ermittlung des Lenkwinkels
- 12: Ermittlung der Fahrbeschleunigung a
- 13: Ermittlung des Lenkmoments M
- 14: Reduzierung des Soll-Moments der linken elektrischen Maschine
- 15: Reduzierung des Soll-Moments der rechten elektrischen Maschine
- 20: Ende der Funktion
- 31: Überprüfung: Lenkwinkel neutral?
- 32: Überprüfung: Fahrbeschleunigung a größer als Schwellenwert?
- 33: Überprüfung: Lenkmoment M gleich Null?
- 40: Adaptionsschleife

## Patentansprüche

1. Verfahren zum automatischen Giermomentenausgleich bei einem Fahrzeug mit einem elektrischen Antrieb mit radindividueller Drehmomentenverteilung, der mindestens zwei elektrische Maschinen umfasst, welche jeweils ein Rad einer Achse antreiben, umfassend die Prüfung während einer Geradeausfahrt des Fahrzeugs, ob ein von Null verschiedenes Lenkmoment auftritt, und im Fall eines auftretenden Lenkmoments die Anpassung der Soll-Momentenanforderung an die beiden elektrischen Maschinen zur Eliminierung des auftretenden Lenkmoments.

2. Verfahren nach Anspruch 1, bei dem vor der Prüfung, ob ein von Null verschiedenes Lenkmoment auftritt, geprüft wird, ob die Fahrbeschleunigung einen vorgegebenen Schwellenwert überschreitet.

3. Verfahren nach Anspruch 1 oder 2, bei dem die Anpassung der Soll-Momentenanforderung an die beiden elektrischen Maschinen zur Eliminierung des auftretenden Lenkmoments über eine Adaptionsschleife erfolgt.

4. Verfahren nach einem der Ansprüche 1 bis 3, bei dem der elektrische Antrieb mit radindividueller Drehmomentenverteilung zwei elektrische Maschinen umfasst, welche jeweils ein Rad einer Achse des Fahrzeugs antreiben.

5. Verfahren nach einem der Ansprüche 1 bis 3, bei dem der elektrische Antrieb mit radindividueller Drehmomentenverteilung vier elektrische Maschinen umfasst, welche jeweils ein Rad des Fahrzeugs antreiben.

6. Verfahren nach einem der Ansprüche 1 bis 5, bei dem die elektrischen Maschinen an der Fahrzeugplattform gelagert sind.

7. Verfahren nach Anspruch 6, bei dem die elektrischen Maschinen radnah angeordnet sind.

8. Verfahren nach Anspruch 6, bei dem die elektrischen Maschinen zentral an der Fahrzeugplattform angeordnet sind.

9. System für den automatischen Giermomentenausgleich bei einem Fahrzeug mit einem elektrischen Antrieb mit radindividueller Drehmomentenverteilung, der mindestens zwei elektrische Maschinen umfasst, welche jeweils ein Rad einer Achse antreiben, umfassend Mittel zur Erfassung eines Lenkwinkels und eines Lenkmoments und eine Steuereinheit, die dafür eingerichtet ist, eine Soll-Momentenanforderung an die mindestens zwei elektrischen Maschinen zu stellen, worin die Steuereinheit dafür eingerichtet ist, Daten zu erfassten Lenkwinkeln und Lenkmomenten zu empfangen und auszuwerten und die Soll-Momentenanforderung an die mindestens zwei elektrischen Maschinen so anzupassen, dass das gemessene Lenkmoment bei Geradeausfahrt des Fahrzeugs verschwindet.

10. System nach Anspruch 9, welches zusätzlich Mittel zur Erfassung einer Fahrbeschleunigung umfasst.
